# EUROPÄISCHE PATENTANMELDUNG

(11) **EP 2 392 832 A2**
(43) Veröffentlichungstag der Anmeldung: **07.12.2011**
(21) Anmeldenummer: 11401519.1
(22) Anmeldetag: 12.05.2011
(51) Int. Cl.: F16B 47/00, A47K 10/38

(54) **Saughalterung**

(30) Priorität: 01.06.2010 DE 102010017192
(71) Anmelder: Zack GmbH, 22113 Oststeinbek (DE)
(72) Erfinder: Linke, Heinrich Konrad, 22049 Hamburg (DE)
(74) Vertreter: Straube, Urs Norman

(57) **Zusammenfassung**

Die Erfindung betrifft eine Saughalterung (1), die einen Saugnapf (2) und eine mit diesem verbundene Betätigungsvorrichtung aufweist, welche ausgebildet ist, den Saugnapf anzuheben, um einen Unterdruck zu erzeugen und ihn so auf einer Standfläche zu befestigen, oder ihn abzusenken und von der Standfläche (3) zu lösen. Um eine kompakte, universell einsetzbare und zuverlässige Saughalterung bereit zu stellen, wird vorgeschlagen, dass die Betätigungsvorrichtung eine Basis (4) mit einer konzentrisch aufliegenden, drehbaren Scheibe (5) umfasst, welche entlang ihrer Umfangsrichtung gekrümmt verlaufende, zur Basis (4) weisende Schrägführungen (6) aufweist, deren Führungsflächen im Verhältnis zur Scheibenebene geneigt sind, wobei für die Basis (4) Auflager (7) vorgesehen sind, die, je nach Drehstellung der Scheibe (5), auf einem Abschnitt der Schrägführungen (6) aufliegen, um bei einer Drehung den Abstand von Scheibe (5) und Basis (4) je nach Drehrichtung zu vergrößern oder zu verringern und dadurch den Saugnapf (2) anzuheben oder abzusenken.

## Beschreibung

Die Erfindung betrifft eine Saughalterung, die einen Saugnapf und eine mit diesem verbundene Betätigungsvorrichtung aufweist, welche ausgebildet ist, den Saugnapf anzuheben, um einen Unterdruck zu erzeugen und ihn so auf einer Standfläche zu befestigen, oder ihn abzusenken und von der Standfläche zu lösen. Derartige Saughalterungen werden verwendet, wenn Bad- oder Küchenzubehör an glatten Standflächen, wie z.B. von Kacheln, befestigt werden sollen ohne dabei deren Material durch Bohrungen dauerhaft zu beschädigen. Eine solche Saughalterung ist als Bestandteil eines Papiertuchhalters in der deutschen Patentschrift DE 10 2006 058 027 B4 beschrieben. Nachteilig ist dabei ein aufwändiger Mechanismus, bei dem die Kraft zur Betätigung des Saugnapfes mit einer langen Stange übertragen wird.

Aufgabe der Erfindung ist es daher, eine Saughalterung vorzuschlagen, die kompakt, universell einsetzbar und zuverlässig ist.

Diese Aufgabe wird dadurch gelöst, dass die Betätigungsvorrichtung eine Basis aufweist, auf der eine drehbare Scheibe angeordnet ist. Die Basis und die Scheibe können eine kreisförmige Grundform haben und die Scheibe ist koaxial auf der Basis angeordnet. Entlang der Umfangsrichtung der Scheibe verlaufen gekrümmte, zur Basis weisende Schrägführungen, deren Führungsflächen im Verhältnis zur Scheibenebene geneigt sind. Die Basis weist Auflager auf, die, je nach Drehstellung der Scheibe, auf einem Abschnitt der Schrägführungen aufliegen. Bei einer Drehung der Scheibe bewegt sich somit die Schrägführung auf dem Auflager. Da die Führungsfläche der Schrägführungen im Verhältnis zur Scheibenebene eine Neigung aufweist, ändert sich mit der Änderung der Position der Schrägführung auf dem Auflager auch der orthogonale Abstand des Auflagers von der Scheibenebene. Damit ändert sich auch der Abstand von Scheibe und der mit den Auflagern verbundenen Basis, wobei er je nach Drehrichtung vergrößert oder verringert wird. Der Saugnapf ist entweder an der Basis oder an der Scheibe befestigt und wird im Verhältnis zu seiner Standfläche auf diese Weise angehoben oder abgesenkt.

Vorteilhafte Ausgestaltungen sind in den Unteransprüchen angegeben und werden nachfolgend erläutert.

Eine sichere Führung und geringe Reibung wird dadurch gewährleistet, dass die Auflager drehbar gelagerte Rollen sind.

Es sind mindestens zwei Schrägführungen und zwei diesen aufliegende Rollen vorgesehen. Dabei sind die Schrägführungen gegenüberliegend auf der Scheibe angeordnet. Eine besonders hohe Auflage- und Drehstabilität ergibt sich bei drei Schrägführungen und drei entsprechenden Rollen.

Die Schrägführungen weisen an ihren Enden jeweils einen Anschlag für die Rollen auf, so dass die Drehung der Scheibe auf die Länge der Schrägführungen begrenzt wird.

Die Basis weist eine nach unten offene Kammer auf. Als "unten" wird die Seite bezeichnet, die bei einer Benutzung der Standfläche zugewandt ist. Die Kammer wird vorzugsweise durch eine obere kreisförmige Deckscheibe und eine diese randständig umlaufende, nach unten weisende Kammerwand gebildet. Bei einer Benutzung der Saughalterung liegt der Saugnapf zunächst nahezu plan auf der Standfläche auf. Durch eine Drehung der Scheibe wird der mittlere Bereich des Saugnapfes angehoben und bewegt sich innerhalb der Kammer nach oben in Richtung der Deckscheibe.

Die Kammerwand ist von einer koaxial beabstandeten Außenwand umgeben. Hierdurch wird von der Außenwand und der Kammerwand eine kreisförmige, rinnenartige Fuge gebildet, in der die Rollen angeordnet sind. Die Fuge dient außerdem zur Aufnahme der Schrägführungen. Die Fuge bildet also eine Führung für die Drehung der Scheibe, die dabei mit ihren Schrägführungen auf den Rollen aufliegt.

Der Saugnapf ist mit einem mittig angeordneten Zapfen an der Betätigungsvorrichtung befestigt. Dadurch wird die Drehung der Scheibe mit der Anhebung oder Absenkung des Saugnapfes gekoppelt.

Zwischen Saugnapf und der oberen Deckscheibe der Basis ist ein vorgespanntes, elastisch rückstellendes Element vorgesehen. Dies ist insbesondere eine Kegelfeder, die auf den Zapfen aufgesteckt ist und ihn umgibt. Hierdurch wird eine nach unten gerichtete Kraft auf den Saugnapf ausgeübt, wodurch er im abgesenkten Zustand fest auf die Standfläche gedrückt wird. Zapfen und rückstellendes Element, insbesondere Kegelfeder, sind innerhalb der Kammer angeordnet.

Auf der drehbaren Scheibe ist eine mitdrehende Abdeckung angeordnet. Diese deckt die Scheibe und die Basis ab.

Die Basis, die Scheibe und die obere Abdeckung weisen jeweils eine zentrale Öffnung auf, durch die der Zapfen des Saugnapfes geführt ist. Hierdurch sind die genannten Bauteile miteinander verbunden.

In einer bevorzugten Ausführungsform ist die Saughalterung als Papiertuchhalter ausgebildet. Hierbei weist sie ein sich axial nach oben erstreckendes, längliches Halteelement, vorzugsweise ein Rohr, zum Aufstecken der Papiertuchrollen, auf.

In einer alternativen Ausführungsform ist die Saughalterung als Türstopper ausgebildet. Hierbei ist ein Pufferelement aus Gummi oder ähnlichem Material vorgesehen.

Die Erfindung wird unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1: eine perspektivische Explosivdarstellung der Saughalterung;

- Figur 2: eine perspektivische, angeschnittene Ansicht der Saughalterung;
- Figur 3a: eine Detailansicht der Saughalterung im vertikalen Schnitt mit abgesenktem Saugnapf;
- Figur 3b: eine Detailansicht der Saughalterung im vertikalen Schnitt mit angehobenem Saugnapf; und
- Figur 4: eine perspektivische Gesamtansicht der Saughalterung mit Halterohr.

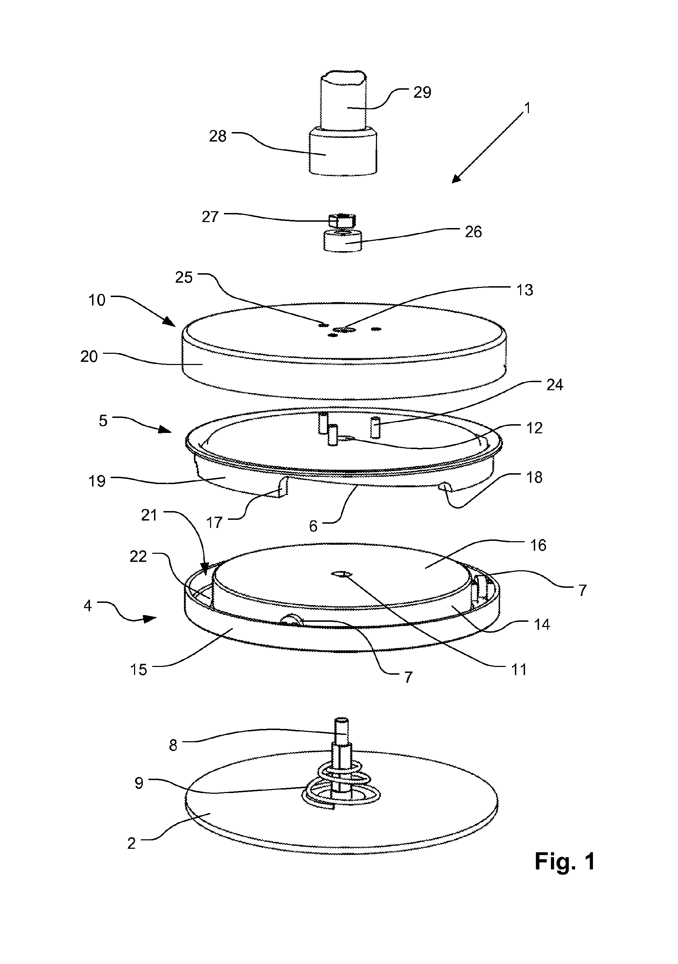

Figur 1 zeigt eine perspektivische Explosivdarstellung der Bauteile einer als Papiertuchhalter ausgebildeten Saughalterung 1. Diese weist einen Saugnapf 2 auf, der aus einem elastischen Material wie Gummi oder ähnlichem besteht. Der Saugnapf 2 ist im abgesenkten Zustand dargestellt. Dabei weist er nicht die übliche Glockenform auf, sondern ist kreisscheibenförmig und liegt somit plan auf einer (nicht gezeigten) Standfläche 3 auf. Vorteilhafterweise wird so beim Anheben mittels eines mittig angeordneten Zapfens 8 ein größerer Unterdruck erzeugt, weil kein luftgefüllter Hohlraum vorhanden ist. Dadurch wird ein effektiverer Saugeffekt erzielt.

Auf dem Saugnapf 2 ist eine kreisförmige Basis 4 angeordnet, deren Durchmesser in etwa dem Durchmesser des Saugnapfes 2 entspricht. Diese besteht aus einer, ebenfalls kreisförmigen, Deckscheibe 16, die von einer nach unten weisenden Kammerwand 14 umrandet wird. Die Deckscheibe 16 bildet mit Kammerwand 14 eine nach unten geöffnete Kammer 33 (nicht gezeigt), deren Öffnung vom Saugnapf 2 abgedeckt wird. Innerhalb dieser Kammer 33 sind der Zapfen 8 und eine den Zapfen 8 umgebende Kegelfeder 9 angeordnet. Beim Anheben des Saugnapfes 2 wird sein innerer Teil in die Kammer 33 gezogen. Die Kammerwand 14 ist von einer koaxial beabstandeten Außenwand 15 umgeben. Kammerwand 14 und Außenwand 15 sind an ihren Rändern durch einen unteren Bodenring 22 miteinander verbunden, der dem äußeren Teil des Saugnapfes 2 aufliegt. Von der Außenwand 15, dem Bodenring 22 und der Kammerwand 14 wird eine kreisförmige, rinnenartige Rundfuge 21 gebildet. In der Rundfuge 21 sind drei drehbare Rollen 7 angeordnet.

Auf der Basis 4 ist eine drehbare Scheibe 5 koaxial angeordnet. Entlang der Umfangsrichtung der Scheibe 5 verlaufen drei gekrümmte, nach unten zur Basis 4 weisende Schrägführungen 6. Deren Führungsflächen sind im Verhältnis zur Scheibenebene geneigt, d.h., sie bilden eine schiefe Ebene. Durch Drehung der Scheibe 5 wird diese im Verhältnis zur Basis 4 je nach Drehrichtung axial nach oben oder nach unten bewegt. Die Auf- oder Abwärtsbewegung der Scheibe 5 ist über den Zapfen 8 mit einer Auf- oder Abwärtsbewegung des Saugnapfes 2 gekoppelt.

Die drei Schrägführungen 6 gehen in drei zur Basis weisende, gekrümmte Wandabschnitte 19 über. Die Rollen 7 liegen auf den Führungsflächen der Schrägführungen 6 auf. Dabei greifen Schrägführungen 6 zusammen mit den Wandabschnitten 19 in die Rundfuge 21 ein, welche somit eine Führung für die Drehung der Scheibe 5 bildet. Die Scheibe 5 ist somit axial auf der Basis 4 drehbar. An dem abgesenkten Ende der Schrägführungen 6 wird von einem Wandabschnitt 19 jeweils eine Anschlagsfläche 17 für die Rollen 7 gebildet, wodurch die Scheibe 5 bei maximaler Absenkung nicht weiter drehbar ist. Das andere Ende der Schrägführung 6 weist jeweils eine Ausnehmung 18 für die Rollen 7 aus. Bei maximal angehobener Position der Scheibe 5 rasten die Rollen 7 durch die Kraft der Kegelfeder 9 in den Ausnehmungen 18 ein und die Scheibe 5 verbleibt in der angehobenen Position. Zum Absenken muss mit Kraft der Widerstand der Kegelfeder 9 überwunden werden.

Auf die Scheibe 5 ist eine Abdeckung 10 gesetzt. Diese deckt die Scheibe und die Basis ab und dient als Drehgriff. Die Scheibe 5 weist drei Schrauben 24 und die Abdeckung 10 drei korrespondierende Öffnungen 25 auf, durch die die Schrauben 24 geführt sind. Hierdurch dreht sich die Abdeckung 10 mit der Scheibe 5 mit.

Die Basis 4, die Scheibe 5 und die obere Abdeckung 10 weisen jeweils zentrale Öffnungen 11, 12, 13 auf, durch die der mit dem Saugnapf 2 verbundene Zapfen 8 geführt ist. Hierdurch sind die genannten Bauteile in koaxialer Anordnung miteinander verbunden. Der Zapfen 8 weist in einem unteren Abschnitt, etwa im Bereich der Kegelfeder 9, Kanten auf und ist in einem oberen Abschnitt rund geformt. Die Öffnung 11 der Basis 4 ist eckig und daher mit dem unteren Abschnitt des Zapfens 8 formschlüssig verbunden. Daher sind Saugnapf 2 und Basis 4 nicht gegeneinander drehbar. Der obere runde Abschnitt des Zapfens 8 ist durch die ebenfalls runden Öffnungen 12, 13 der Scheibe 5 und der Abdeckung 10 geführt. Daher sind Scheibe 5 und Abdeckung 10 gemeinsam gegen Saugnapf 2 und Basis 4 drehbar.

Auf der Abdeckung 10 ist eine auf den Zapfen 8 gesteckte Hülse 26 und auf dieser eine Mutter 27 angeordnet, die auf den Zapfen 8 geschraubt ist, wodurch alle genannten Bauteile miteinander befestigt sind.

Im zusammengebauten Zustand werden Hülse 26 und Mutter 27 von einem Aufsatz 28 verdeckt, der mit den drei Schrauben 24 auf der Abdeckung befestigt ist. Der Aufsatz 28 trägt ein (teilweise gezeigtes) sich axial nach oben erstreckendes Halterohr 29, das zum Aufstecken einer Papiertuchrolle (nicht gezeigt) geeignet ist.

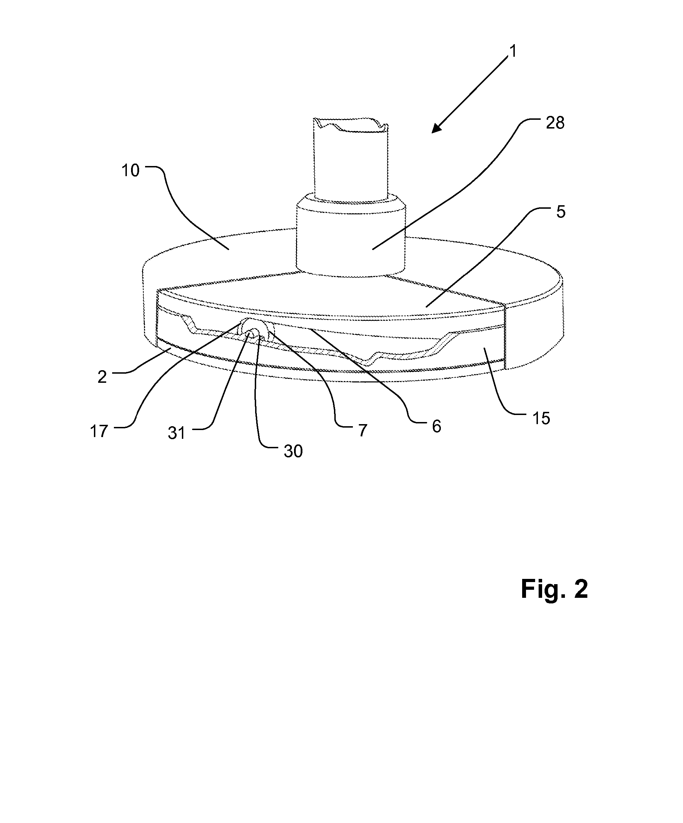

Figur 2 zeigt eine perspektivische Ansicht der Saughalterung 1. Ein Segment der oberen Abdeckung 10 sowie ein Abschnitt der Außenwand 15 der Basis 4 sind angeschnitten. Der Außenwand 15 ist ein Lager 30 für eine Achse 31 der Rolle 7 angeformt. Das andere (nicht dargestellte) Lager der Achse 31 ist der (nicht dargestellten) Kammerwand 14 angeformt. Die Scheibe 5 liegt mit ihrer Schrägführung 6 auf der Rolle 7 auf. Scheibe 7 und Saugnapf 2 sind im abgesenkten Zustand dargestellt; daher liegt die Rolle 7 dem Anschlag 17 an.

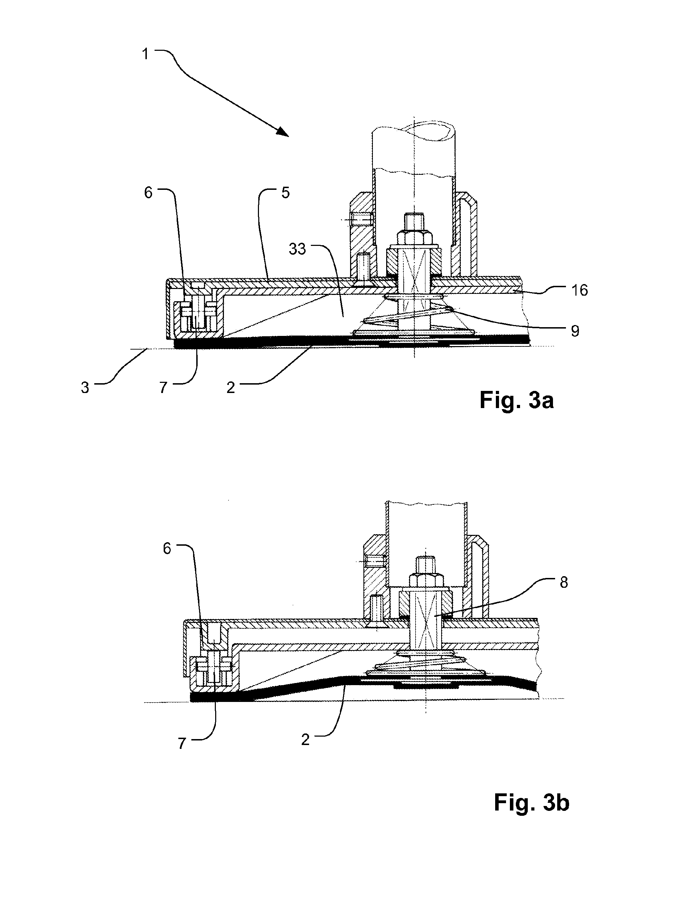

Die Figuren 3a und 3b zeigen jeweils eine Detailansicht der Saughalterung 1 im vertikalen Schnitt mit abgesenktem und angehobenem Saugnapf 2.

In Figur 3a liegt der Saugnapf 2 plan auf einer Standfläche 3 auf. Die Basis 4 liegt mit dem Bodenring 22 auf dem äußeren Teil des Saugnapfes 2 auf. Der Saugnapf 2 wird durch eine vorgespannte Kegelfeder 9 in einer Kammer 33 der Basis 4 mit Kraft nach unten gedrückt. Die drehbare Scheibe 5 liegt mit ihren Schrägführungen 6 auf den Rollen 7 und der Deckscheibe 16 der Basis 4 auf.

Figur 3b zeigt die Saughalterung aus Figur 3a mit gedrehter Scheibe 5. Durch die Drehung liegt ein anderer Abschnitt der Schrägführung 6 der Rolle 7 auf, der einen größeren Abstand von der Ebene der Scheibe 5 hat. Hierdurch werden die Scheibe 5 und der Zapfen 8 im Verhältnis zur Basis 4 und zur Standfläche 3 angehoben, wobei die Anhebung kontinuierlich bei fortschreitender Drehung erfolgt. Der Zapfen 8 zieht den Saugnapf 2 nach oben, wodurch ein Unterdruck erzeugt wird.

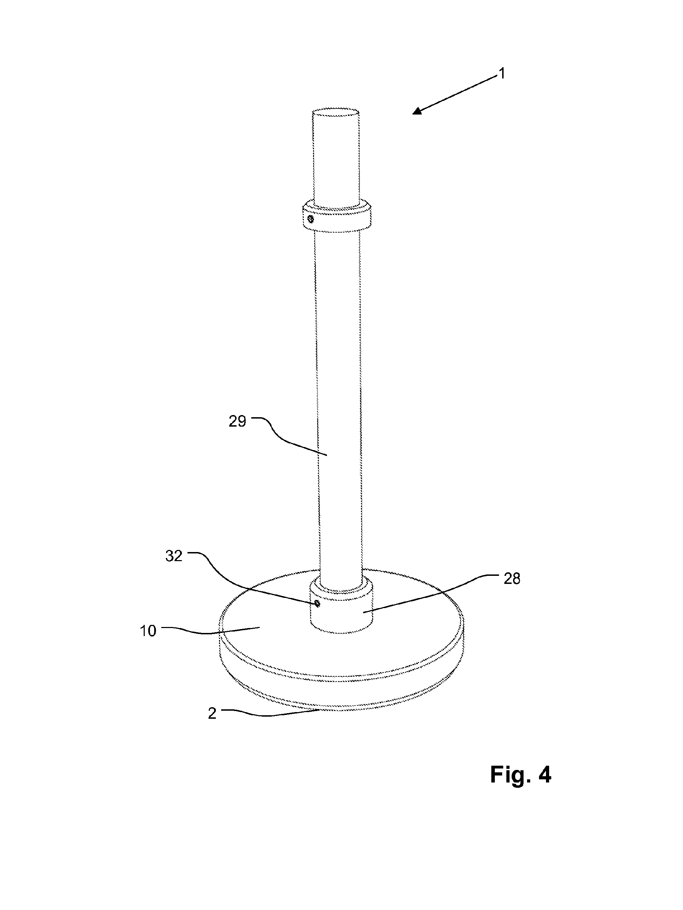

Figur 4 zeigt eine perspektivische Gesamtansicht der als Papiertuchhalter ausgebildeten Saughalterung 1 mit Saugnapf 2, Abdeckung 10 und Aufsatz 28. Am Aufsatz 28 ist das Halterohr 29 mit einer Querschraube 32 befestigt. Abdeckung 10, Aufsatz 28 und Halterohr 29 drehen sich mit der (nicht gezeigten) Scheibe 5 mit. Sie können daher manuell umgriffen und gedreht werden, um den Papiertuchhalter auf einer Standfläche sicher zu befestigen oder zu lösen.

### Bezugszeichenliste

- 1.: Saughalterung
- 2.: Saugnapf
- 3.: Standfläche
- 4.: Basis
- 5.: Scheibe
- 6.: Schrägführung
- 7.: Rollen
- 8.: Zapfen
- 9.: Kegelfeder
- 10.: Abdeckung
- 11.: Öffnung der Basis
- 12.: Öffnung der Scheibe
- 13.: Öffnung der Abdeckung
- 14.: Kammerwand
- 15.: Außenwand
- 16.: Deckscheibe der Basis
- 17.: Anschlagsfläche
- 18.: Ausnehmung
- 19.: Scheibenwand
- 20.: Abdeckungswand
- 21.: Rundfuge
- 22.: Bodenring
- 24.: Schraube
- 25.: Schraubenöffnungen
- 26.: Hülse
- 27.: Mutter
- 28.: Aufsatz
- 29.: Halterohr
- 30.: Lager
- 31.: Achse
- 32.: Querschraube
- 33.: Kammer

## Patentansprüche

1. Saughalterung, die einen Saugnapf (2) und eine mit diesem verbundene Betätigungsvorrichtung aufweist, welche ausgebildet ist, den Saugnapf (2) anzuheben, um einen Unterdruck zu erzeugen und ihn so auf einer Standfläche (3) zu befestigen, oder ihn abzusenken und von der Standfläche (3) zu lösen, **dadurch gekennzeichnet, dass** die Betätigungsvorrichtung eine Basis (4) mit einer konzentrisch aufliegenden, drehbaren Scheibe (5) umfasst, welche entlang ihrer Umfangsrichtung gekrümmt verlaufende, zur Basis weisende Schrägführungen (6) aufweist, deren Führungsflächen im Verhältnis zur Scheibenebene geneigt sind, wobei für die Basis (4) Auflager (7) vorgesehen sind, die, je nach Drehstellung der Scheibe (5), auf einem Abschnitt der Schrägführungen (6) aufliegen, um bei einer Drehung den Abstand von Scheibe (5) und Basis (4) je nach Drehrichtung zu vergrößern oder zu verringern und dadurch den Saugnapf (2) anzuheben oder abzusenken.

2. Saughalterung nach Anspruch 1, **dadurch gekennzeichnet, dass** die Auflager drehbar gelagerte Rollen (7) sind.

3. Saughalterung nach Anspruch 1 oder Anspruch 2, **dadurch gekennzeichnet, dass** mindestens zwei, vorzugsweise drei Schrägführungen (6) und eine entsprechende Anzahl von Rollen (7) vorgesehen sind.

4. Saughalterung nach einem der vorhergehenden Ansprüche, **dadurch gekennzeichnet, dass** die Schrägführungen (6) an ihren Enden jeweils einen Anschlag für die Rollen (7) aufweisen, der die Drehung der Scheibe (5) begrenzt.

5. Saughalterung nach einem der vorhergehenden Ansprüche, **dadurch gekennzeichnet, dass** die Basis (4) eine nach unten offene Kammer (33) aufweist, in der der Saugnapf (2) angeordnet ist, wobei die Kammer (33) vorzugsweise durch eine obere kreisförmige Deckscheibe und eine diese randständig umlaufende, nach unten weisende Kammerwand gebildet wird.

6. Saughalterung nach einem der vorhergehenden Ansprüche, **dadurch gekennzeichnet, dass** die Kammerwand von einer koaxial beabstandeten Außenwand umgeben wird, so dass beide eine kreisförmige Fuge zur Aufnahme der Schrägführungen (6) bilden, in der die Rollen (7) angeordnet sind.

7. Saughalterung nach einem der vorhergehenden Ansprüche, **dadurch gekennzeichnet, dass** der Saugnapf (2) mit einem mittig angeordneten Zapfen (8) an der Betätigungsvorrichtung befestigt ist.

8. Saughalterung nach einem der vorhergehenden Ansprüche, **dadurch gekennzeichnet, dass** zwischen Saugnapf (2) und der oberen Deckscheibe (16) der Basis (4) ein vorgespanntes, elastisch rückstellendes Element, insbesondere eine den Zapfen (8) umgebende Kegelfeder (9), vorgesehen ist, um eine nach unten gerichtete Kraft auf den Saugnapf (2) auszuüben.

9. Saughalterung nach einem der vorhergehenden Ansprüche, **dadurch gekennzeichnet, dass** auf der drehbaren Scheibe (5) eine mitdrehende Abdeckung (10) angeordnet ist.

10. Saughalterung nach einem der vorhergehenden Ansprüche, **dadurch gekennzeichnet, dass** Basis (4), drehbare Scheibe (5) und Abdeckung (10) jeweils eine zentrale Öffnung (11, 12, 13) aufweisen, durch die der Zapfen (8) geführt ist.

11. Saughalterung nach einem der vorhergehenden Ansprüche, **dadurch gekennzeichnet, dass** ein sich axial nach oben erstreckendes, längliches Halteelement, vorzugsweise ein Halterohr (29), zum Aufstecken von Papiertuchrollen oder dergleichen, vorgesehen ist.

12. Saughalterung nach einem der Ansprüche 1 bis 10, **dadurch gekennzeichnet, dass** ein Pufferelement als Türstopper vorgesehen ist.
